(19) Europäisches Patentamt
European Patent Office
Office européen des brevets

(11) **EP 2 315 804 B1**

(12) **EUROPEAN PATENT SPECIFICATION**

(45) Date of publication and mention of the grant of the patent:
**29.08.2012 Bulletin 2012/35**

(21) Application number: **09777147.1**

(22) Date of filing: **10.07.2009**

(51) Int Cl.:
*C08L 23/10* (2006.01)    *C08L 23/16* (2006.01)
*C08J 3/24* (2006.01)    *C08L 51/06* (2006.01)
*C08F 8/50* (2006.01)    *C08K 5/098* (2006.01)
*C08K 5/14* (2006.01)

(86) International application number:
**PCT/EP2009/005069**

(87) International publication number:
**WO 2010/009825 (28.01.2010 Gazette 2010/04)**

(54) **PROCESS FOR PREPARING MODIFIED POLYPROPYLENE COMPOSITIONS**

VERFAHREN ZUR HERSTELLUNG VON MODIFIZIERTEN POLYPROPYLENZUSAMMENSETZUNGEN

PROCÉDÉ DE PRÉPARATION DE COMPOSITIONS DE POLYPROPYLÈNE MODIFIÉ

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **23.07.2008 EP 08013231**

(43) Date of publication of application:
**04.05.2011 Bulletin 2011/18**

(73) Proprietor: **Saudi Basic Industries Corporation Riyadh 11422 (SA)**

(72) Inventor: **NEUTEBOOM, Peter NL-6160 GA Geleen (NL)**

(74) Representative: **Zuideveld, Mihaela et al SABIC Intellectual Property Group P.O. Box 3008 6160 GA Geleen (NL)**

(56) References cited:
**EP-A- 0 688 817**     **US-A1- 2008 150 261**
**US-B1- 6 310 140**

• **DATABASE WPI Week 198428 Thomson Scientific, London, GB; AN 1984-172989 XP002504869 -& JP 59 093709 A (MITSUI PETROCHEM IND CO LTD) 30 May 1984 (1984-05-30) cited in the application**
• **KIM B K ET AL: "EFFECT OF VISCOSITY RATIO, RUBBER COMPOSITION, AND PEROXIDE/ COAGENTTREATMENT IN PP/EPR BLENDS" JOURNAL OF APPLIED POLYMER SCIENCE, JOHN WILEY AND SONS INC. NEW YORK, US, vol. 61, no. 3, 18 July 1996 (1996-07-18), pages 439-447, XP000634714 ISSN: 0021-8995**

## Description

The invention relates to a process for preparing a modified polypropylene composition, which comprises a step of adding of at least one peroxide and a polyfunctional unsaturated co-agent to a heterophasic propylene copolymer containing a propylene homopolymer and/or a propylene copolymer as matrix phase and an elastomeric component as amorphous dispersed phase. This invention also relates to a modified polypropylene composition. The invention further relates to a moulded article comprising said composition.

Such a process is known from document JP59-93709. This document discloses a process for preparing chemically modified polypropylene compositions, which comprises the steps of mixing a polypropylene-based composition comprising 55 to 95 parts by weight polypropylene, from 1 to 30 parts by weight propylene-ethylene random copolymer with 20 to 80 mol% propylene, and optionally polyethylene, with an organic peroxide and a co-agent; and heating and extruding the mixture. Di-acrylate compounds, specifically polyethylene glycol dimethacrylate or ethylene glycol dimethacrylate, allyl compounds, maleimide-based compounds and quinine dioxime-based compounds are mentioned in a list as co-agents. The examples specifically disclose divinylbenzene and 1,3,5-triacryloylhexahydro-s-triazine as co-agents used together with an organic peroxide to modify the polypropylene composition.

In the recent years, heterophasic polypropylene copolymers, also known as impact polypropylene copolymers or polypropylene block copolymers, are an important class of polymers due to their attractive combination of mechanical properties, such as impact strength over a wide temperature range and low cost, which copolymers find wide range of applications in consumer and automotive industry. Heterophasic polypropylene copolymers have basically at least a two-phase structure, consisting of a propylene-based semi-crystalline matrix and a dispersed elastomer phase, typically an ethylene-propylene rubber (EPR). These polypropylenes are generally prepared in one or more reactors, by polymerization of propylene in the presence of a catalyst, and subsequent polymerization of a propylene-ethylene mixture. The resulting polymeric materials are heterophasic, but the specific morphology usually depends on the preparation method and monomer ratio. Many studies have demonstrated the presence of four phases in the heterophasic propylene-based copolymers systems: crystalline polypropylene, amorphous polypropylene, crystalline ethylene-propylene rubber, and amorphous ethylene-propylene rubber.

A number of documents disclose a process of chemically modifying heterophasic polypropylene copolymers. For example, US2007/0004864A1 discloses a method to prepare a polypropylene composition with enhanced impact strength properties by mixing and extruding an impact modifying polymer, a primary co-agent that is a monofunctional monomer, a secondary co-agent that is a multifunctional monomer, an oligomer or polymer, and a radical initiator. EP1354901A1 relates to a process to prepare a heterophasic propylene composition with improved mechanical properties by mixing a heterophasic polyolefin composition comprising 70 to 95 wt% polypropylene-based matrix phase; 5 to 30 wt % of a disperse phase comprising an ethylene rubber copolymer; 0.01 to 3 wt% of an organic peroxide and, optionally, 0.05 to 10 wt% of a bifunctionally unsaturated monomer selected from divinyl compounds, allyl compounds, dienes and mixtures of these; heating and melting the mixture. EP1391482A2 discloses a process to obtain a polypropylene composition with improved stiffness/impact balance and gloss by mixing 99 to 90 wt% of a heterophasic polypropylene copolymer, which comprises 70 to 100 wt% propylene-based matrix phase and 0 to 30 wt% elastomeric ethylene rubber copolymer dispersed phase, with 1 to 10 wt% reactively modified heterophasic copolymer. The reactively modified heterophasic copolymer is produced by mixing a heterophasic copolymer with 0.05 to 3 wt% of an organic peroxide and with 0.01 to 10 wt% bifunctionally unsaturated monomers selected from divinyl compounds, allyl compounds, dienes and mixtures of these; heating and melting the mixture.

EP1319041 B1 relates to a rheology-modified thermoplastic elastomer composition with enhanced mechanical properties comprising 50 to 90 wt% of

*Annex 1* an elastomeric ethylene/alpha-olefin polymer or ethylene/alpha-olefin polymer blend; and 50 to 10 wt% of a high melting polymer selected from polypropylene and propylene-ethylene copolymers, wherein the rheology modification is induced by 0.05 to 0.3 wt% peroxide and 0.025 to 0.6 wt% free radical co-agent selected from methacrylates, allyl and vinyl compounds, with a ratio peroxide:co-agent of 1:2 to 2:1. US2008/0150261A1 discloses a partly cross-linked thermoplastic elastomer polyolefin composition comprising a) 45-80 wt% of at least one propylene-based polymer selected from the group of propylene-ethylene copolymers, propylene-alpha-olefin copolymers and propylene-ethylene-alpha-olefin copolymers with a an impact resistance of at least 30 $kJ/m^2$ (23°C, ISO180); b) 25 to 50 wt% of at least one copolymer of ethylene and at least one alpha-olefin having a maximum density of 0.870 $g/cm$ (ISO 1183) and c) 1 to 15 wt% of at least one thermoplastic elastomer comprising SBS material. A cross-linking agent in an amount of 0.1 to 3 wt% and a free radical initiator in an amount of 0.05 to 2 wt% can be also added to the thermoplastic elastomer composition. US6310140B1 relates to thermoplastic elastomers of good dyeability, high strength and elasticity, produced by mixing 20 to 80 wt% homopolymers and/or propylene copolymers, 80 to 20 wt% elastomeric $C_4$ to $C_{12}$ olefin copolymers and/or terpolymers, 0.10 to 4 wt% $C_8$ to $C_{12}$ diacrylates, 0 to 4 wt% peroxides, and optionally fillers and processing aids, *i.e.* calcium or magnesium stearate as lubricants. The examples specifically describe a thermoplastic elastomer consisting of a propylene-ethylene copolymer with 3.9 wt% ethylene, an ethylene-octene copolymer, 36 wt% butylene glycol diacrylate, 8 wt% of a peroxide and acetone. It is well-known in the literature that thermoplastic elastomers have some distinctly different properties compared to heterophasic polypropylene copolymers. Thermoplastic elastomers are described for example in Kirk-Othmer Encyclopedia of Chemical Technology, G. Holden, Thermoplastic Elastomers, 2002, DOI: 10.1002/0471238961.2008051808151204.a01.pub2.

A drawback of the process disclosed in document JP59-93709 is that the reaction of modifying the heterophasic polypropylene copolymers with the organic peroxide and the co-agent is difficult to control, resulting in products that show poor processability during moulding.

The object of the invention is therefore to provide a process which allows better control over the preparation of the modified polypropylene compositions and which enhances processability during a subsequent moulding process of the compositions obtained.

The object is achieved according to the invention with the process of Claim 1, wherein an organic peroxide, a poly(n) functional acrylate with n ≥ 2 as co-agent, at a peroxide:co-agent mass ratio of from 1:0.4 to 1:5; and an acid scavenging compound are used to chemically modify a heterophasic polypropylene copolymer.

Surprisingly, such a combination of an organic peroxide and a poly(n)functional acrylate with n ≥ 2 in a specific ratio and an acid scavenging compound allows better control over the preparation of the modified polypropylene compositions and enhances processability during a subsequent moulding process.

An additional advantage of the process according to the present invention is that the composition made with this process allows production of articles that exhibit excellent surface appearance, in particular showing minimum presence of tiger stripes or flow marks when formed into moulded articles. The reduction of tiger stripes enhances the aesthetical appearance of the article and thus its commercial value.

Several publications have addressed the problem of improving surface appearance properties in moulded articles and various solutions have been proposed. For instance, document US2002/0035209A1 employs a polypropylene resin composition obtained by using two kinds of specific propylene-ethylene block copolymers which are mutually different in structure and, each being characterized by a certain intrinsic viscosity value. EP1328581B1 discloses a polyolefin masterbatch comprising a crystalline polypropylene component containing two different fractions having a specific melt flow ratio and an ethylene copolymer, which has high intrinsic viscosity. Document US5468808 describes adding a low molecular weight liquid rubber in a certain amount to polypropylene compositions to reduce the severity of flow marks in moulded articles. WO 2007/024541 discloses adding a fluoropolymer to a polypropylene composition to improve flow marks. None of these documents, however, teaches to modify polypropylene compositions with at least one organic peroxide, a polyfunctional acrylate and an acid scavenging compound in order to improve surface appearance characteristics, particularly to minimize the presence of tiger stripes in moulded articles made from such compositions.

A further advantage is that by employing the process of present invention, modified polypropylene compositions with good mechanical properties, e.g. high modulus and high impact strength at low temperature are obtained. Furthermore, the polypropylene compositions obtained with the process according to the present invention show stable phase morphology and excellent paint adhesion.

The process for producing a modified polypropylene composition comprises a step of adding at least one organic peroxide, a poly(n)functional acrylate, with n ≥ 2, as co-agent, in a peroxide:co-agent mass ratio of from 1:0.4 to 1:5, and an acid scavenging compound, to a heterophasic propylene copolymer comprising from 50 to 99% by mass of a matrix phase, based on the total mass of heterophasic propylene copolymer, comprising a propylene homopolymer and/or a propylene copolymer comprising at least 70% by mass of propylene and up to 30% by mass ethylene, based on the total mass of the matrix polymer, and/or at least one $C_4$ to $C_{10}$ alpha-olefin, and from 1 to 50% by mass dispersed phase, based on the total mass of heterophasic propylene copolymer, comprising an ethylene-alpha-olefin elastomer consisting of more than 20% by mass ethylene and up to 80% by mass of at least one $C_3$ to $C_{10}$ alpha-olefin, based on the total mass of the dispersed elastomer.

In industry there is a continuous search for methods to modify the rheology of polyolefins in liquid phase, in particular to reduce their viscosity. The viscosity reduction is often described also as "vis-breaking", "melt-shifting", "modifying rheology" or "controlling rheology". Organic peroxides are already known to be used for viscosity reduction. There are different ways in which the organic peroxides behave in conventional degradation processes upon heating and melting conditions. On one hand, under certain process conditions, the peroxides initially decompose to produce free radicals, which then abstract hydrogen from a tertiary carbon of the polypropylene backbone to form free radicals on the polymer, and which further recombine. On the other hand, peroxides initiate a breakage of the longest chains of the polymer molecules and, subsequently, this results in a decrease in viscosity of the polymer, an increase in melt flow rate, and a narrower molecular weight distribution, characteristics which are directly responsible for improved flow properties of polypropylene in order to make the product more suitable for certain applications. The extent of each type of behaviour is generally influenced by the nature and concentration of the peroxide.

The process according to present invention requires the presence of at least one organic peroxide that at higher temperatures forms free radicals, which can lead, for example, to grafting or chain extension of the polymer with the co-agent. Suitable for present invention are organic peroxides having a decomposition half-life of less than 1 minute at the average process temperature during formation of the modified polypropylene compositions. Suitable organic peroxides include dialkyl peroxides, e.g. dicumyl peroxides, peroxyketals, peroxycarbonates, diacyl peroxides, peroxyesters and peroxydicarbonates. Specific examples of these include benzoyl peroxide, dichlorobenzoyl peroxide, dicumyl peroxide, di-tert-butyl peroxide, 2,5-dimethyl-2,5-di(peroxybenzoato)-3-hexene, 1,4-bis(tert-butylperoxyisopropyl)benzene, lauroyl peroxide, tert-butyl peracetate, $\alpha,\alpha'$-bis(tert-butylperoxy)diisopropylbenzene (Luperco® 802), 2,5-dimethyl-2,5-di (tert-butylperoxy)-3-hexene, 2,5-dimethyl-2,5-di(tert-butylperoxy)-hexane, tert-butyl perbenzoate, tert-butyl perphenylacetate, tert-butyl per-secoctoate, tert-butyl perpivalate, cumyl perpivalate, and any combination thereof. Preferably, a dialkyl peroxides is employed in the process according to the present invention. More preferably, the organic peroxide is $\alpha,\alpha'$-bis-(tert-butylperoxy)diisopropylbenzene. The organic peroxide of present invention may be applied in amount of between 0.02% by mass and 0.25% by mass, preferably between 0.03 and 0.20% by mass and more preferably between 0.05 and 0.15% by mass based on the total composition.

It is commonly known that during the visbreaking process, the polymer chains of the dispersed phase are also broken down into smaller chains. A disadvantageous effect hereof often is that some desired properties of the heterophasic system deteriorate, such as lowering of impact strength and melt flow stability. The presence of a co-agent, commonly a compound containing one or more unsaturated groups, influences the effect of generated radicals induced by the peroxide, as the radicals may react in different ways with such co-agent, depending on its structure.

According to the process of present invention, a poly(n)functional acrylate with n ≥ 2 is used as co-agent. Without wishing to be bound by any theory, it is believed that the polyfunctional acrylate co-agent also introduces some long chain branching by grafting onto the polymer chains of the matrix and especially of the dispersed phase and/or increase the fraction of high molecular weight material by chain extension. The presence of free radicals introduced by the peroxide are essential for the polyfunctional acrylate to react with the heterophasic propylene copolymer and thus to minimize impact strength and melt flow stability deterioration.

The co-agent is a polyfunctional acrylate monomer containing two or more unsaturated groups capable of undergoing radical addition. Suitable examples of co-agents may include di- and tri-(meth)acrylates, such as 1,4-butanediol-dimethacrylate (BDDMA), 1,6-hexanediol-dimethacrylate (HDDMA), 1,3-butyleneglycol-dimethacrylate (BGDMA), ethyleneglycol-dimethacrylate (EGDMA), dodecanediol-dimethacrylate (DDDMA), trimethylolpropane-trimethacrylate (TMPTMA) and trimethacrylate ester (TMA ester). Preferably, the co-agent is 1,4-butanediol-dimethacrylate or trimethylolpropane-trimethacrylate. More preferably, 1,4-butanediol-dimethacrylate (BDDMA) is used according to present invention also because BDDMA is an environmentally friendly and non-toxic material.

By applying the poly(n)functional acrylate as co-agent, with n ≥ 2, in the process according to the invention, the impact strength of the moulded product does not decrease, but even clearly increases. Experiments according to present invention confirm that at -20 °C the moulded articles comprising a composition of 99.69% by mass heterophasic propylene copolymer, 0.06% by mass peroxide, 0.3% by mass BDDMA and 0.05% by mass calcium stearate show an Izod impact strength (according to ISO 180 4A) higher than 65 kJ/m$^2$ and also good stiffness values, compared with an impact value of 39 kJ/m$^2$ and poor stiffness obtained for a sample without BDDMA. In addition, the tiger stripe performance of the moulded articles is significantly enhanced. The combination of polyfunctional acrylate, organic peroxide and acid scavenger apparently influences the melt elasticity of the phases present in the heterophasic propylene copolymer and promotes phase bounding, also resulting in stable phase morphology and good adhesion to paint.

The poly(n)functional acrylate co-agent, with n ≥ 2, may be applied in amounts between 0.01% by mass and 0.5% by mass, preferably, between 0.05 and 0.35% by mass, more preferably between 0.1 and 0.3% by mass and most preferably between 0.15 and 0.25% by mass based on the total modified polypropylene composition. Advantages of the preferred ranges include stronger interaction between phases of the heterophasic polypropylene copolymer and increased tiger stripe performance of the moulded articles.

According to the process of present invention, the organic peroxide and poly(n)functional acrylate co-agent, with n ≥ 2, are added in a mass ratio of from 1:0.4 to 1:5, preferably in a ratio of from 1:1 to 1:4. Advantages of operation within these ratio limits lie in the possibility to increase flow properties of the propylene-based composition to the desired values without compromising other properties like impact and surface appearance.

The acid scavenger is a compound having the role of reducing the tendency of acids to participate in reactions with compounds other than the acid scavenger. It is true that metal carboxylates, such as stearates are already known to be typically added in polypropylene-based compositions as lubricants or as acid scavengers for neutralizing any traces of acidic catalyst residues from polymerization; but in the present composition they have an additional effect. The compound used as acid scavenger in the process according to present invention is influencing the rheology of the moulded propylene-based compositions, in addition to its well-known purposes, though an explanation for this behaviour was not found yet.

Suitable acid scavengers may include metallic salts, such as metal carboxylates like calcium stearate, zinc stearate, calcium lactate, calcium stearoyl-2-lactylate, calcium carbonate, calcium hydroxide, sodium stearate, lithium stearate, magnesium hydroxycarbonate, aluminum hydroxycarbonate, dihydroxy talcite and calcium pelargonate. The acid scavenging compound can be used at concentrations of 0.01 to 0.3% by mass, preferably of 0.01 to 0.1% by mass and more preferably of 0.02 to 0.08% by mass based on the total composition, because of good impact strength and surface appearance. Preferably, a metal stearate is used as acid scavenging compound in the process according to present invention. Most preferably, calcium stearate is used because enables good control of reaction, in addition to its already acknowledged functions.

The use of the acid scavenging compound, in combination with the organic peroxide and the poly(n)functional acrylate with n ≥ 2 as co-agent, allows better control of the process according to present invention and enhances processability of the propylene-based compositions during a subsequent moulding step. In case an acid scavenging compound would not be used in the process according to present invention, but only an organic peroxide and co-agent, a polymer composition having suitable flow properties for moulding would be difficult to obtain.

A heterophasic propylene copolymer typically comprises a matrix phase and a dispersed phase. Generally, the particulate dispersed or rubber phase confers good toughness, while the matrix is responsible for retaining good high-temperature performance and adequate stiffness.

The heterophasic propylene copolymer employed in the process according to present invention comprises a matrix phase that forms a continuous phase, and is a propylene homopolymer and/or a copolymer of propylene and ethylene and/or at least one $C_4$ to $C_{10}$ alpha-olefin. The MFI of the matrix may be in the range of from 0.4 to 80 g/ 10 min (2.16 kg/230˚C), preferably in the range of from 3 to 70, more preferably in the range of from 10 to 60 g/10 min, even more preferably between 15 to 40 g/10 min.

The matrix phase polymer comprises at least 70% by mass of propylene and up to 30% by mass ethylene and/or at least one $C_4$ to $C_{10}$ alpha-olefin, based on polymer. Suitable examples of $C_4$ to $C_{10}$ alpha-olefins which may be employed in the matrix include 1-butene, 1-pentene, 4-methyl-1-pentene, 1-hexene, 1-heptene or 1-octene, from which 1-butene is the preferred third comonomer. More preferably, the propylene copolymer is a propylene-ethylene copolymer which has less than 15, preferably less than 10% and more preferably less than 8% by mass ethylene.

The amount of matrix phase in the heterophasic propylene copolymer is from 50 to 99% by mass of total mass of the heterophasic copolymer. Preferably, the matrix is a propylene homopolymer in an amount of from 55 to 85% by mass, more preferably 60 to 80% by mass, even more preferably of from 65 to 75% and most preferably of from 65 to 70% by mass of the total amount of heterophasic copolymer, to give good balance between impact and stiffness in the products obtained.

The dispersed phase is embedded in the matrix in a discontinuous form and typically has particle size in the range of 0.5 to 10 microns, as determined by transmission electron microscopy (TEM) method. The MFI of the dispersed phase may be in the range of 0.006 to 5 g/10 min (2.16 kg/230˚C), preferably it is in the range of 0.03 to 1.5 g/10min and more preferably in the range of 0.04 to 1 g/10 min.

The dispersed phase in the composition according to the invention comprises an ethylene-alpha-olefin elastomer consisting of more than 20%, preferably more than 40%, and most preferably more than 50% by mass ethylene and up to 80%, preferably up to 60% and more preferably up to 55% by mass of at least one $C_3$ to $C_{10}$ alpha-olefin, based on the total amount of the dispersed phase elastomer. Most preferably, the amount of ethylene in the dispersed phase is in the range of between 40 to 60% by mass. Examples of suitable $C_3$ to $C_{10}$ alpha-olefins, which may be employed as ethylene comonomers include propylene, 1-butene, 1-pentene, 4-methyl-1-pentene, 1-hexene, 1-heptene and 1-octene. Preferably, propylene, 1-butene and 1-octene are employed in present invention. More preferably, ethylene-propylene copolymer, known also as ethylene-propylene rubber (EPR) is used as dispersed phase. Most preferably, the amount of ethylene in the EPR is in the range of between 40 to 60% by mass, more preferably of between 45 to 55% by mass.

The amount of the amorphous dispersed phase is in the range of 1 to 50% by mass, preferably 10 to 45% by mass, more preferably 15 to 40% by mass, even more preferably 20 to 38% by mass and most preferably 30 to 35% by mass, based on the total amount of heterophasic propylene copolymer. Too high values result in decrease of tensile strength and stiffness properties and too low amounts give relatively low impact characteristics.

The heterophasic polypropylene copolymers employed in the process according to present invention can be produced by using any conventional techniques, e.g. multistage process polymerization, such as bulk polymerization, gas phase polymerization, slurry polymerization, solution polymerization or combinations thereof. Any conventional catalyst systems, i.e. Ziegler-Natta or metallocene can be used. Such techniques and catalysts are described, for example, in WO06/010414; Polypropylene and other Polyolefins, by Ser van der Ven, Studies in Polymer Science 7, Elsevier 1990; WO06/010414, US4399054 and US4472524. The skilled person is aware of various possibilities to produce such heterophasic systems and will find out the appropriate method to produce suitable heterophasic polypropylene copolymers to be used in present invention.

The heterophasic propylene copolymer according to the invention may further contain additives, for instance nucleating agents and clarifiers, stabilizers, release agents, fillers, plasticizers, anti-oxidants, antistatics, scratch resistance agents, high performance fillers, impact modifiers, flame retardants, blowing agents, recycling additives, coupling agents, anti microbials, anti fogging additives, slip additives, anti blocking additives, polymer processing aids such as lubricants. Such additives are well known in the art. The skilled person will know how to employ these additives in conventional effective amounts.

In the process according to the present invention, a polyethylene can be further added to the heterophasic polypropylene copolymer. The amount of polyethylene may be of from 0 to 35% by mass, preferably from 1 to 25% by mass and more preferably of from 5 to 15% by mass based on the total modified polypropylene composition.

The polyethylene may be any linear or branched, substituted or unsubstituted ethylene homopolymer and/or copolymer of ethylene and at least one $C_3$ to $C_{10}$ alpha-olefins. The copolymer may have an ethylene content of at least 85% by mass of the total copolymer content, preferably of at least 90% by mass. Suitable $C_3$ to $C_{10}$ alpha-olefins which may be employed as ethylene comonomers in the polyethylene may include propylene, 1-butene, 1-pentene, 4-methyl-1-pentene, 1-hexene, 1-heptene and 1-octene, with propylene and 1-butene as preferred comonomers.

The polyethylene can have a density of less than 0.920 $g/cm^3$, preferably less than 0.900 $g/cm^3$, more preferably less than 0.890 $g/cm^3$, and most preferably less than 0.870 $g/cm^3$. The density is higher than 0.850 $g/cm^3$, and preferably higher than 0.860 $g/cm^3$ (according to ISO1183/A). The MFR of the polyethylene may be in the range of 0.1 to 100 g/10 min (2.16 kg/230°C). Preferably, the polyethylene is an ethylene homopolymer, because of good dimensional stability, *i.e.* high coefficient of linear thermal expansion (CLTE) and good shrinkage. More preferably, the polyethylene is low density polyethylene (LDPE).

The polyethylene may be produced by using any known technique by the skilled person, such as high pressure or low density methods. Such techniques are described, for example, in documents US 5272236, US 5278272, US 4937299 and EP129368 and in Handbook of Polyethylene, by A.J. Peacock, ISBN: 0-8247-9546-6.

A variety of additives can be employed in the process according to present invention. Examples of these additives comprise nucleating agents, stabilizers, inorganic fillers, e.g. talc, pigments, surface tension modifiers, lubricants, heat stabilisers, flame-retardants, antioxidants, dyes, plasticizers, antistatic agents, reinforcing agents; and/or components that enhance interfacial bonding between polymer and filler, such as a maleated polypropylene. The skilled person can readily select any suitable combination of additives and additive amounts without undue experimentation. The amount of additives depends on their type and function; typically is of from 0 to 30% by mass; preferably of from 0 to 20% by mass; more preferably of from 0 to 10% by mass and most preferably of from 0 to 5% by mass based on the total composition.

The various components used in the process of the invention may be combined using any means known in the art and in any order in order to obtain modified polypropylene compositions. The sum of all components added in the process of the invention should add up to 100% by mass. Some or all of the components can be pre-mixed in a conventional mixing device at ambient temperature prior to introduction to an extruder or can be melt-mixed directly in the extruder by their addition, in any order and by any conventional means, at different sites of the extruder. In order to obtain better control of ratio of components, the organic peroxide, the co-agent, the acid scavenging compound and some stabilizers are generally pre-mixed and then added to the heterophasic propylene copolymer into the extruder.

The extrusion process can take place at a temperature which ultimately exceeds the melting point of the polypropylene composition, by using any conventional extruder, such as a twin-screw extruder. The temperature can vary through the different zones of the extruder as required. For example, the temperature can vary from 180°C in the feed zone to 300°C at the die. Preferably, the temperature in the extruder can vary from 200 to 265°C; lower temperatures may impede reactions between the organic peroxide and co-agent and, as consequence, propylene compositions with favourable properties may not be obtained; too high temperatures may induce undesired degradation processes, resulting in polypropylene compositions with poor mechanical properties. Likewise, the screw speed of the extruder may vary as needed, typically from 100 rpm to 400 rpm.

The residence time of the mixture in the extruder may be lower then 1 minute, preferably between 10 and 40 seconds. Though short, applying residence times within this range allows good control of the reaction and good surface appearance of the moulded articles comprising the modified polypropylene composition.

Further, the invention relates to a modified polypropylene composition obtainable by the above-described process.

The invention particularly relates to a modified polypropylene composition comprising an acid scavenging compound and a heterophasic propylene copolymer comprising from 50 to 99% by mass of a matrix phase, based on the total mass of the heterophasic propylene copolymer, comprising a propylene homopolymer and/or a propylene copolymer comprising at least 70% by mass of propylene and up to 30% by mass ethylene, based on the total mass of the matrix phase polymer, and/or at least one $C_4$ to $C_{10}$ alpha-olefin, and from 1 to 50% by mass dispersed phase, based on the total mass of the heterophasic propylene copolymer, comprising an ethylene-alpha-olefin elastomer consisting of more than 20% by mass ethylene and up to 80% by mass of at least one $C_3$ to $C_{10}$ alpha-olefin, based on the total mass of the dispersed phase elastomer, which composition is characterized by an elasticity index p of at least 1, wherein: $ER_\lambda$ is the melt elasticity at $G'=G''$ at $\lambda$; G' is the storage modulus; G" is the loss modulus; A is the value of G" at which G' is determined; $y = 0.5\lambda+200$; and/or by an Izod impact strength at -20°C measured according to ISO 180 4A of higher than 50 $kJ/m^2$.

Preferably, the modified polypropylene composition is characterized by an elasticity index of at least 1, wherein:

$ER_\lambda$ is the melt elasticity at $G'=G''$ at $\lambda$; G' is the storage modulus; G" is the loss modulus; A is the value of G" at which G' is determined; $y = 0.5\lambda+200$; and by an Izod impact strength at - 20˚C measured according to ISO 180 4A of higher than 50 kJ/m².

The elasticity index is at least 1 and preferably, the elasticity index is in the range of 1 to 4, because such compositions show good tiger stripes performance. More preferably, the elasticity index p is in the range of 1 to 3 and most preferably in the range of 1 to 2.

The Izod impact strength at -20˚C measured according to ISO 180 4A is preferably higher than 60 kJ/m², more preferably higher than 65 kJ/m² and most preferably higher than 70 kJ/m².

Preferably, the modified polypropylene composition is further characterized by tiger stripes visibility of at least 7, more preferably of at least 7.5 and most preferably of at least 8.

The modified polypropylene composition according to present invention shows enhanced processability, and moulded articles made from this composition show favourable impact behaviour. The composition has a melt flow index (MFI) of from 1 to 40 g/10 min, preferably from 1 to 20 g/10 min and more preferably from 4 to 10 g/10 min, as determined by ISO1133 (2.16 kg/230˚C).

The invention also relates to a moulded article comprising the modified polypropylene composition as defined above. The modified polypropylene composition may be transformed into shaped (semi-)finished articles using a variety of processing techniques. Examples of suitable processing techniques include injection moulding, injection compression moulding, extrusion, and extrusion compression moulding. Injection moulding is widely used to produce articles such as for example automotive exterior parts like bumpers, automotive interior parts like instrument panels, or automotive parts under the bonnet. Extrusion is widely used to produce articles such as rods, sheets and pipes.

The moulded article according to present invention shows a favourable combination of good strength and stiffness, high impact characteristics also at low temperature, and exhibits excellent surface appearance, in particular showing minimum presence of defects like tiger stripes.

The invention will be further elucidated with reference to the following nonlimiting examples.

### Example 1

A modified polypropylene composition was prepared by mixing at ambient temperature (about 20˚C) 99.69% by mass heterophasic propylene copolymer composition comprising of 65% by mass of a propylene homopolymer matrix phase having a MFI of 4.5 g/10 min and a 35% by mass of a dispersed phase comprising 52 mass% ethylene and having a MFI of 0.08 g/10 min, 0.06% by mass α,α'-bis-(tert-butylperoxy)diisopropylbenzene (Luperco® 802), 0.10% by mass 1 ,4-butanediol-dimethacrylate (BDDMA), 0.05% by mass calcium stearate as acid scavenger and 0.10% by mass Irganox® B225 as a stabilizer by using a mixer to obtain a dry powder mix. The powder mix was fed then into a ZSK30 Wemer & Pfleiderer, co-rotating twin-screw extruder equipped with high shear mixing sections. The extruder was operated at a barrel temperature of 240˚C and a screw speed of 250 rpm to effectively melt and homogenize the powder mix into dry pellets. The extruded pellets obtained were injection moulded into plaques as described below. The results are shown in Table 1.

### Example 2

Analogously to Example 1, a modified polypropylene composition was prepared but now by mixing 99.49% by mass heterophasic propylene copolymer composition comprising 65% by mass of a propylene homopolymer matrix phase having a MFI of 4.5 g/10 min and a 35% by mass of a dispersed phase comprising 52% by mass ethylene and having a MFI of 0.08 g/10 min, 0.06% by mass α,α'-bis-(tert-butylperoxy)diisopropylbenzene, 0.30% by mass BDDMA, 0.05% by mass calcium stearate as acid scavenger and 0.10% by mass stabilizer Irganox® B225. The results are shown in Table 1.

### Example 3

Analogously to Example 1, a modified polypropylene composition was prepared but now by mixing 99.62% by mass heterophasic propylene copolymer composition comprising 65% by mass of a propylene homopolymer matrix phase having a MFI of 25 g/10 min and a 35% by mass of a dispersed phase comprising 52% by mass ethylene and having a MFI of 0.08 g/10 min, 0.03% by mass α,α'-bis-(tert-butylperoxy)diisopropylbenzene, 0.15% by mass BDDMA, 0.10% by mass calcium stearate as acid scavenger and 0.10% by mass stabilizer Irganox® B225. The results are shown in Table 1.

### Example 4

Analogously to Example 1, a modified polypropylene composition was prepared but now by mixing 89.59% by mass heterophasic propylene copolymer comprising 65% by mass of a propylene homopolymer matrix phase having a MFI of 4.5 g/10 min and a 35% by mass of a dispersed phase comprising 52% by mass ethylene and having a MFI of 0.08 g/10 min, 10% by mass of an LDPE having a MFI of 65 g/10 min (measured at 190 ˚C), 0.06% by mass $\alpha,\alpha'$-bis-(tert-butylperoxy)diisopropylbenzene, 0.20% by mass BDDMA, 0.05% by mass calcium stearate as acid scavenger and 0.10% by mass stabilizer Irganox® B225. The results are shown in Table 1.

### Comparative Experiment A

Analogously to Example 1, a modified polypropylene composition was prepared but now by mixing 99.81% by mass heterophasic propylene copolymer composition comprising 65% by mass of a propylene homopolymer matrix phase having a MFI of 4.5 g/10 min and a 35% by mass of a dispersed phase comprising 52% by mass ethylene and having a MFI of 0.08 g/10 min, 0.04% by mass $\alpha,\alpha'$-bis-(tert-butylperoxy)diisopropylbenzene, 0.05% by mass calcium stearate and 0.10% by mass stabilizer Irganox® B225. The results are shown in Table 1.

### Comparative Experiment B

Analogously to Example 1, a modified polypropylene composition was prepared but now by mixing 99.74% by mass heterophasic propylene copolymer composition comprising 65% by mass of a propylene homopolymer matrix phase having a MFI of 4.5 g/10 min and a 35% by mass of a dispersed phase comprising 52% by mass ethylene and having a MFI of 0.08 g/10 min, 0.06% by mass $\alpha,\alpha'$-bis-(tert-butylperoxy)diisopropylbenzene, 0.10% by mass BDDMA and 0.10% by mass stabilizer Irganox® B225. The results are shown in Table 1.

### Comparative Experiment C

Analogously to Example 2, a modified polypropylene composition was prepared but now by mixing 99.54% by mass heterophasic propylene copolymer composition comprising 65% by mass of a propylene homopolymer matrix phase having a MFI of 4.5 g/10 min and a 35% by mass of a dispersed phase comprising 52% by mass ethylene and having a MFI of 0.08 g/10 min, 0.06% by mass $\alpha,\alpha'$-bis-(tert-butylperoxy)diisopropylbenzene, 0.30% by mass BDDMA and 0.10% by mass stabilizer Irganox® B225. The results are shown in Table 1.

### Comparative Experiment D

Analogously to Example 1, a polypropylene composition was prepared but now by mixing 99.437% by mass heterophasic propylene copolymer composition comprising 65% by mass of a propylene homopolymer matrix phase having a MFI of 4.5 g/10 min and a 35% by mass of a dispersed phase comprising 52% by mass ethylene and having a MFI of 0.08 g/10 min, 0.063% by mass $\alpha,\alpha'$-bis-(tert-butylperoxy)diisopropylbenzene, 0.35% by mass 1,9-decadiene, 0.05% by mass calcium stearate and 0.10% by mass stabilizer Irganox® B225. The results are shown in Table 1.

### Comparative Experiment E

Analogously to Example 1, a polypropylene composition was prepared but now by mixing 99.437% by mass heterophasic propylene copolymer composition comprising 65 mass% of a propylene homopolymer matrix phase having a MFI of 4.5 g/10 min and a 35% by mass of a dispersed phase comprising 52% by mass ethylene and having a MFI of 0.08 g/10 min, 0.063% by mass $\alpha,\alpha'$-bis-(tert-butylperoxy)diisopropylbenzene, 0.35% by mass divinyl benzene, 0.05% by mass calcium stearate and 0.10% by mass stabilizer Irganox B225. The results are shown in Table 1.

**Izod impact strength (notched)** was determined according to ISO 180/4A at 0 and at -20˚C. Standard plaques having dimensions of 65 mm long x 65 mm wide x 3.2 mm thick were injection moulded using an Engel 45 injection moulding machine; at a temperature of about 215˚C and 235˚C from feeder to nozzle. The holding pressure, time and injection speed were optimized during the experiment to get good quality plaques with no sink marks.

### Tiger striping evaluation

Plaques having a dimension of 290 mm long x 30 mm wide x 3 mm thick were injection moulded using an Arburg 6 injection moulding machine. The samples were moulded under the following conditions: injection speeds of 23.4, 59.8 and 257.4 mm/min and temperature of the melt set at 200, 240 and 280˚C. The resulting plaques were visually examined for tiger stripes under sunlight using the naked eye. The tiger stripe visibility is graded between 1 and 10, 1 meaning that tiger stripes are extremely visible and 10 meaning that no visible tiger stripes are observed. Materials with a tiger stripe visibility between 7 and 10 are considered to have a good tiger stripe performance.

**Determination of the elasticity index (p)**

The storage modulus G' and the loss modulus G" were measured using an Ares plate-plate rheometer. The rheometer was operated in a frequency sweep mode with frequencies between 0.046 and 100 rad/s and at 230°C. Measurements were performed on samples that were compression moulded into discs with a diameter of 25 mm and with a thickness of 1.8 mm.

**Determination of morphology**

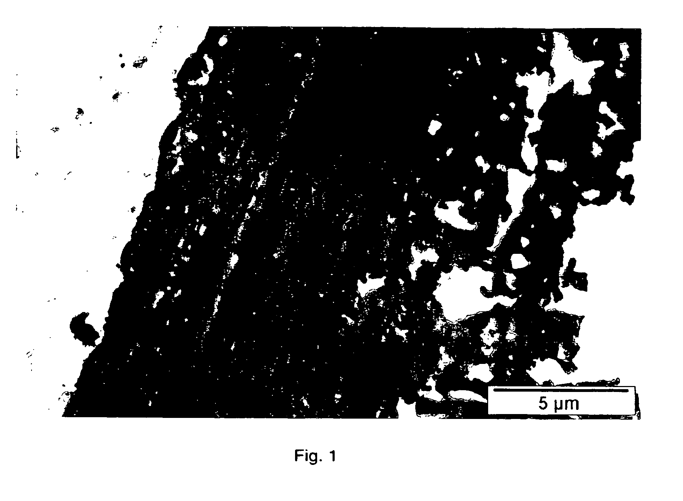

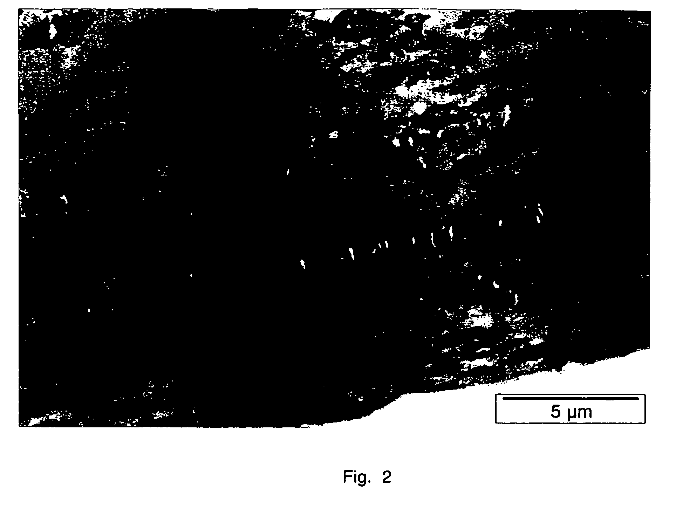

Morphology of the compositions was studied by using known transmission electron microscopy (TEM) method. The micrographs obtained are presented in Fig. 1 and 2.

**Determination of mechanical properties**

Tensile strength, elongation at break and elongation at yield were measured according to ISO R37/2 at a deformation speed of 50 mm/min.
E-modulus was determined according to ASTM D790 at 23°C.
Shrinkage was determined according to ISO 294-4 after conditioning at 23 °C during 24h.

**Table 1**

| Sample | MFI | E-modulus perpendicular | Tensile strength | Elongation at break | Elongation at yield | Shrinkage | $p = \dfrac{ER_\lambda}{y}$ | | Izod at 0˚C (ISO 180 4A) | | Izod at -20˚C (ISO 180 4A) | | Tiger stripe visibility |
|---|---|---|---|---|---|---|---|---|---|---|---|---|---|
| | | | | | | | y = 400 | y = 2500 | Energy | Break type | Energy | Break type | |
| | (g/10 min) | N/mm$^2$ | N/mm$^2$ | % | % | % | | | (kJ/m$^2$) | | (kJ/m$^2$) | | |
| **Ex. 1** | 8.20 | 726 | 21 | 708 | 13.7 | 1.48 | 1.37 | 1.16 | 71 | tough | 66 | tough | 7.5 |
| **Ex. 2** | 5.60 | 735 | 23 | 726 | 15.2 | 1.52 | 1.23 | 1.13 | 72 | tough | 67 | tough | 8.0 |
| **Ex. 3** | 9.04 | 750 | 20 | 614 | 13.2 | 1.44 | n.d. | n.d. | 68 | tough | 52 | tough-brittle | 7.0 |
| **Ex. 4** | 5.0 | n.d. | n.d. | n.d. | n.d | n.d. | n.d. | n.d. | 77 | tough | 72 | tough | 6.7 |
| **Comp. Exp.A** | 11.20 | 727 | 21 | 750 | 15.3 | 1.40 | 0.62 | 0.64 | 66 | tough | 39 | tough-brittle | 6.5 |
| **Comp. Exp.B** | 5.30 | n.d. | n.d. | n.d. | n.d. | n.d. | n.d. | n.d. | n.p. | n.p. | n.p. | n.p. | n.p. |
| **Comp. Exp.C** | 5.10 | n.d. | n.d. | n.d. | n.d. | n.d. | n.d. | n.d. | n.p. | n.p. | n.p. | n.p. | n.p. |
| **Comp. Exp.D** | n.d. | n.d. | n.d. | n.d. | n.d. | n.d. | n.d. | n.d. | n.d. | n.d. | 12.7 | brittle | n.d. |
| **Comp. Exp.E** | n.d. | n.d. | n.d. | n.d. | n.d. | n.d. | n.d. | n.d. | n.d. | n.d. | 18.7 | brittle | n.d. |

n.d. = not determined; n.p. = due to very poor quality of moulded plaques, impact strength and tiger stripe performance evaluation was not possible.

Table 1 shows that the heterophasic propylene copolymers modified with peroxide and BDDMA in the presence of an acid scavenger could be easily processed during injection moulding (Examples 1-4), in comparison with the heterophasic propylene copolymers modified with peroxide, which yielded moulded plaques of poor quality (Comparative Experiments B and C). The samples in Examples 1-3 show an elasticity index higher than 1, good mechanical properties, *e.g.* high E-modulus, good stiffness and an impact strength at -20°C of higher than 50 kJ/m$^2$ and even higher than 65 kJ/m$^2$ and a tiger stripes visibility higher than 7 and even higher than 7.5. The sample of Example 4, which further comprises LDPE, was also easily processed and shows good stiffness and an impact strength at -20°C of 72 kJ/m$^2$.

The TEM micrographs shown in Fig. 1 and Fig. 2 demonstrate significant differences between the phase morphology of the peroxide degraded material of Comparative Experiment 1 and the material modified with peroxide and BDDMA. Three phases can be distinguished in these figures: an ethylene-rich rubber phase; an ethylene-propylene-rich rubber phase and a propylene-rich matrix phase.

Fig. 1 shows the morphology of a heterophasic polypropylene copolymer composition modified with 0.04% by mass α,α'-bis-(tert-butylperoxy)diisopropylbenzene. This micrograph illustrates delamination of the surface layer from the rest of the polymer plaque. The extreme orientation of the propylene-rich rubber and the lack of interaction between the PP-matrix and the rubber phases make a composition with this kind of morphology susceptible to delamination.

Fig. 2 shows the morphology of the heterophasic polypropylene copolymer composition modified with 0.04% by mass α,α'-bis-(tert-butylperoxy)diisopropylbenzene and 0.30% by mass BDDMA. BDDMA has a visibly large effect on the melt elasticity of the ethylene-rich rubber phase as well as on the propylene-rich rubber phase. Apparently, the interaction between the PP matrix, the ethylene-propylene-rich rubber phase and the ethylene-rich rubber phase is significantly strengthened by BDDMA.

Due to increased interaction between different polymer phases, the sample containing BDDMA (Fig. 1) does not show delaminated structure as the sample without BDDMA (Fig. 2).

**Claims**

1.  A process for producing a modified heterophasic propylene copolymer composition comprising step of adding at least one organic peroxide, a poly(n)functional acrylate, with n ≥ 2, as co-agent, in a peroxide:co-agent mass ratio of from 1:0.4 to 1:5, and an acid scavenging compound, to a heterophasic propylene copolymer comprising from 50 to 99% by mass of a matrix phase, based on the total mass of the heterophasic propylene copolymer, comprising a propylene homopolymer and/or a propylene copolymer comprising at least 70% by mass of propylene and up to 30% by mass ethylene, based on the total mass of the matrix phase polymer, and/or at least one $C_4$ to $C_{10}$ alpha-olefin, and from 1 to 50% by mass dispersed phase, based on the total mass of the heterophasic propylene copolymer, comprising an ethylene-alpha-olefin elastomer copolymer consisting of more than 20% by mass ethylene and up to 80% by mass of at least one $C_3$ to $C_{10}$ alpha-olefin, based on the total mass of the dispersed phase elastomer.

2.  The process according to Claim 1, wherein the organic peroxide is α,α'-bis-(tert-butylperoxy)diisopropylbenzene.

3.  The process according to Claim 1 or 2, wherein the poly(n)functional acrylate is 1,4-butanediol-dimethacylate.

4.  The process according to any of Claims 1 to 3, wherein the peroxide:co-agent ratio is of from 1:1 to 1:4.

5.  The process according to any of Claims 1 to 4, wherein the acid scavenging compound is calcium stearate.

6.  The process according to any of Claims 1 to 5, wherein the matrix is a polypropylene homopolymer and the dispersed phase comprises between 40% and 60 % by mass ethylene.

7.  The process according to any of Claims 1 to 6, wherein further a polyethylene is added.

8.  A modified polypropylene composition obtainable by the process according to any of Claims 1 to 7, **characterized by** an elasticity

$$p = \frac{ER_\lambda}{y}$$

index of at least 1, wherein: $ER_\lambda$ is the melt elasticity at $G'=G''$ at λ, G' is the storage modulus, G" is the loss modulus, A is the value of G" at which G' is determined and $y = 0.5A+200$; and/or by an Izod impact strength at -20 °C measured according to ISO 180 4A of higher than 50 kJ/m$^2$.

9. The composition according to any of Claims 8, wherein Izod impact strength at -20˚C measured according to ISO 180 4A is higher than 65 kJ/m$^2$.

10. The composition according to any of Claims 8 9, further **characterized by** a tiger stripes visibility higher than 7.

11. The composition according to any of Claims 8 to 10, wherein the elasticity index is between 1 and 4.

12. A moulded article comprising the modified polypropylene composition according to any of Claims 8 to 11.

**Patentansprüche**

1. Verfahren zum Herstellen einer modifizierten heterophasigen Propylen-Copolymer-Zusammensetzung, umfassend den Schritt des Zugebens wenigstens eines organischen Peroxids, eines poly(n)funktionellen Acrylats mit n ≥ 2 als Co-Agens mit einem Peroxid:Co-Agens-Massenverhältnis von 1:0,4 bis 1:5 und einer Säurefängerverbindung zu einem heterophasigen Propylen-Copolymer, umfassend von 50 bis 99 Masse-% einer Matrixphase, bezogen auf die Gesamtmasse des heterophasigen Propylen-Copolymers, umfassend ein Propylen-Homopolymer und/oder ein Propylen-Copolymer, umfassend wenigstens 70 Masse-% Propylen und bis zu 30 Masse-% Ethylen, bezogen auf die Gesamtmasse des Matrixphasen-Polymers, und/oder wenigstens ein C$_4$- bis C$_{10}$-alpha-Olefin und von 1 bis 50 Masse-% dispergierte Phase, bezogen auf die Gesamtmasse des heterophasigen Propylen-Copolymers, umfassend ein Ethylen-alpha-olefinelastomer-Copolymer, bestehend aus mehr als 20 Masse-% Ethylen und bis zu 80 Masse-% an wenigstens einem C$_3$- bis C$_{10}$-alpha-Olefin, bezogen auf die Gesamtmasse des Dispergierte-Phase-Elastomers.

2. Verfahren gemäß Anspruch 1, wobei das organische Peroxid α,α'-Bis(tert-butylperoxy)diisopropylbenzol ist.

3. Verfahren gemäß Anspruch 1 oder 2, wobei das poly(n)funktionelle Acrylat 1,4-Butandioldimethacrylat ist.

4. Verfahren gemäß einem der Ansprüche 1 bis 3, wobei das Peroxid:Co-Agens-Verhältnis von 1:1 bis 1:4 beträgt.

5. Verfahren gemäß einem der Ansprüche 1 bis 4, wobei die Säurefängerverbindung Calciumstearat ist.

6. Verfahren gemäß einem der Ansprüche 1 bis 5, wobei die Matrix ein Polypropylen-Homopolymer ist und die dispergierte Phase zwischen 40 Masse-% und 60 Masse-% Ethylen umfasst.

7. Verfahren gemäß einem der Ansprüche 1 bis 6, wobei ferner ein Polyethylen zugegeben wird.

8. Modifizierte Polypropylen-Zusammensetzung, erhältlich durch das Verfahren gemäß einem der Ansprüche 1 bis 7, **gekennzeichnet durch** einen Elastizitätsindex $p = \dfrac{\overline{ER_\lambda}}{y}$ von wenigstens 1,

   wobei: $ER_\lambda$ die Schmelzelastizität bei $G' = G''$ bei $\lambda$ ist, $G'$ der Speichermodul ist, $G''$ der Verlustmodul ist, $\lambda$ der Wert von $G''$ ist, bei dem $G'$ bestimmt wird und $y = 0, 5\lambda + 200$;
   und/oder **durch** eine Izod-Schlagzähigkeit bei -20 ˚C, gemessen gemäß ISO 180 4A, von größer als 50 kJ/m$^2$.

9. Zusammensetzung gemäß Anspruch 8, wobei die Izod-Schlagzähigkeit bei -20 ˚C, gemessen gemäß ISO 180 4A, größer als 65 kJ/m$^2$ ist.

10. Zusammensetzung gemäß einem der Ansprüche 8 oder 9, ferner **gekennzeichnet durch** eine Sichtbarkeit von Tigerstreifen von höher als 7.

11. Zusammensetzung gemäß einem der Ansprüche 8 bis 10, wobei der Elastizitätsindex zwischen 1 und 4 beträgt.

12. Geformter Gegenstand, umfassend die modifizierte Polypropylen-Zusammensetzung gemäß einem der Ansprüche 8 bis 11.

**Revendications**

1. Procédé pour la production d'une composition de copolymère hétérophasique du propylène modifié comprenant l'étape consistant à ajouter au moins un peroxyde organique, un acrylate poly(n)fonctionnel, n étant $\geq 2$, comme co-agent, en un rapport massique peroxyde:co-agent de 1:0,4 à 1:5, et un composé fixateur d'acide, à un copolymère hétérophasique du propylène comprenant de 50 à 99% en masse d'une phase matrice, sur la base de la masse totale du copolymère hétérophasique du propylène, comprenant un homopolymère du propylène et/ou un copolymère du propylène comprenant au moins 70% en masse de propylène et jusqu'à 30% en masse d'éthylène, sur la base de la masse totale du polymère de la phase matrice, et/ou d'au moins une alpha-oléfine en $C_4$ à $C_{10}$, et de 1 à 50 % en masse de phase dispersée, sur la base de la masse totale du copolymère hétérophasique du propylène, comprenant un copolymère élastomère d'éthylène-alpha-oléfine constitué de plus de 20% en masse d'éthylène et jusqu'à 80% en masse d'au moins une alpha-oléfine en $C_3$ à $C_{10}$, sur la base de la masse totale de l'élastomère de la phase dispersée.

2. Procédé selon la revendication 1, dans lequel le peroxyde organique est l'$\alpha,\alpha'$-bis(tert-butylperoxy)diisopropylbenzène.

3. Procédé selon la revendication 1 ou 2, dans lequel l'acrylate poly(n)fonctionnel est le diméthacrylate de butane-1,4-diol.

4. Procédé selon l'une quelconque des revendications 1 à 3, dans lequel le rapport peroxyde:co-agent est de 1:1 à 1:4.

5. Procédé selon l'une quelconque des revendications 1 à 4, dans lequel le composé fixateur d'acide est le stéarate de calcium.

6. Procédé selon l'une quelconque des revendications 1 à 5, dans lequel la matrice est un homopolymère de type polypropylène et la phase dispersée comprend entre 40% et 60% en masse d'éthylène.

7. Procédé selon l'une quelconque des revendications 1 à 6, dans lequel en outre un polyéthylène est ajouté.

8. Composition de polypropylène modifié pouvant être obtenue par le procédé selon l'une quelconque des revendications 1 à 7, **caractérisée par** un indice d'élasticité $p = \dfrac{ER_\lambda}{y}$ d'au moins 1,

   où :

   $ER_\lambda$ est l'élasticité à l'état fondu à G' = G'' à $\lambda$,
   G' est le module de conservation
   G'' est le module de perte,
   $\lambda$ est la valeur de G'' à laquelle G' est déterminé et
   y = 0,5$\lambda$ + 200 ;

   et/ou par une résistance au choc Izod à -20°C mesurée selon la norme ISO 180 4A supérieure à 50 kJ/m$^2$.

9. Composition selon la revendication 8, dans laquelle la résistance au choc Izod à -20°C mesurée selon la norme ISO 180 4A est supérieure à 65 kJ/m$^2$.

10. Composition selon l'une quelconque des revendications 8 ou 9, **caractérisé en outre par** une visibilité de zébrures supérieure à 7.

11. Composition selon l'une quelconque des revendications 8 à 10, dans laquelle l'indice d'élasticité est compris entre 1 et 4.

12. Article moulé comprenant la composition de polypropylène modifié selon l'une quelconque des revendications 8 à 11.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 59093709 A
- US 20070004864 A1
- EP 1354901 A1
- EP 1391482 A2
- EP 1319041 B1
- US 20080150261 A1
- US 6310140 B1
- US 20020035209 A1
- EP 1328581 B1

- US 5468808 A
- WO 2007024541 A
- WO 06010414 A
- US 4399054 A
- US 4472524 A
- US 5272236 A
- US 5278272 A
- US 4937299 A
- EP 129368 A

**Non-patent literature cited in the description**

- Polypropylene and other Polyolefins. **Ser van der Ven.** Studies in Polymer Science. Elsevier, 1990, 7

- **A.J. Peacock.** Handbook of Polyethylene